Europäisches Patentamt

European Patent Office

Office européen des brevets

(19)

(11) Publication number: **0 212 842 B1**

## EUROPEAN PATENT SPECIFICATION

(12)

(45) Date of publication of patent specification: **16.10.91**

(51) Int. Cl.⁵: **G07F 7/00**, G07F 7/02, G07C 9/00

(21) Application number: **86305442.5**

(22) Date of filing: **15.07.86**

(54) Control system.

(30) Priority: **22.07.85 GB 8518483**

(43) Date of publication of application:
**04.03.87 Bulletin 87/10**

(45) Publication of the grant of the patent:
**16.10.91 Bulletin 91/42**

(84) Designated Contracting States:
**AT BE CH DE FR IT LI LU NL SE**

(56) References cited:
**EP-A- 0 147 284        WO-A-84/03785
WO-A-85/01812       DE-A- 2 210 088
FR-A- 2 126 602       FR-A- 2 212 064
FR-A- 2 535 491       GB-A- 2 146 154
US-A- 3 624 608       US-A- 3 742 453
US-A- 3 754 122       US-A- 4 072 850**

(73) Proprietor: **CITY WHEELS LIMITED
16 Berkeley Street
London W1X 5AE(GB)**

(72) Inventor: **Dodson, Christopher
MORTIMER TECHNOLOGY LIMITED Mortimer
Hill
Mortimer Reading Berkshire RG7 3PG(GB)**

(74) Representative: **Wright, Peter David John et al
R.G.C. Jenkins & Co. 26 Caxton Street
London SW1H 0RJ(GB)**

EP 0 212 842 B1

**Description**

The present invention relates to a control system operative to recognise a token carried by a user so as to permit access to one or more facilities. In a particular embodiment, the system is operable to recognise a token as a key for a door lock. For example, the control system may be operable to recognise a token as a key for the doors of a hired vehicle forming part of an urban transport system.

In the system described in US 3,624,608 access to the vehicle by means of a credit card token takes place at a vehicle station at the start of a hire transaction. The credit card is read by a card reader in the vehicle and, if the central computer ascertains that the information relating to the identity of the proposed user is valid, a gate of the vehicle station is automatically opened to allow the user to drive out. The credit card reader may be interlocked with the vehicle ignition so that a valid credit card must be inserted in the card reader before the vehicle ignition can be operated.

There is no teaching in this document of the possibility of the credit card being usable as a key to gain access to use of the vehicle repeatedly and intermittently during the period of hire, and the card reader does not "learn" the information it reads from the card. Although the validity of the credit card may be time-limited as far as its use for hiring a vehicle is concerned, its validity for gaining access to the vehicle during a period of hire is not considered.

WO 85/01812 describes a unit for rental of games etc. for limited time periods. At the end of a period the rented item becomes inoperable in order to prompt the user to return it to the dispensing machine. The credit card is only used once to initiate the hire period, and it is not the credit card which becomes unusable after a limited period, but the rented item itself.

According to a first aspect of the present invention there is provided a control system responsive to a user-presented information-bearing token for use in controlling access to the use of a vehicle by way of one or more access control units, such as door locks and/or ignition switch thereof, comprising means for receiving information identifying a particular token presented thereto, characterised by the provision of means for storing said identifying information and by the system being operable so as, when intermittently presented with that token during a terminable time period after receiving said identifying information, to recognise that token as a key and upon presentation thereof to permit such access to the use of the vehicle and until the termination of said time period not to so recognise other tokens, and thereafter no longer to permit such access to the use of the vehicle until further identifying information relating to a token is received.

The time period may be terminated by presentation of the token to the control system in a particular manner and/or at a particular time.

Preferably, the control system initially checks the validity of the token and is operable to cause rejection of an invalid token.

The identifying information may initially be received as the result of reading information from the token. Alternatively, the identifying information may initially be received from a source other than the token.

The control system may be operable to permit a token to function as a key to a lock. The control system may be adapted for use with the token in the form of a credit card.

The control system may comprise a central control unit in communication with a plurality of auxiliary control units wherein each auxiliary unit is in communication with at least one facility of the vehicle and is responsive to signals from the central control unit. The selected event may be the receipt by an auxiliary control unit of a selected signal from the central control unit.

The identifying information may be sent to the auxiliary control units from the central control unit. Alternatively, the identifying information may be sent to the central control unit via an auxiliary control unit.

Preferably the control system includes means for receiving information identifying a payment token and/or the owner thereof to enable payment to be made for the use of the or each facility, which system is adapted also to recognise the payment token as a key and to permit access to and/or operation of one or more of the facilities when intermittently presented with the token after receiving said identifying information.

The payment token may be in the form of a credit card.

A particular embodiment of the present invention will now be described, by way of example, with reference to the accompanying drawings in which:

Figure 1 is a schematic diagram of a control system according to a first embodiment of the present invention;

Figure 2 is a block diagram representing a charging station computer;

Figure 3 is a block diagram representing an in-car computer;

In general terms, in the embodiment a control system according to the present invention is incorporated

2

in an urban transport system in which electrically powered vehicles are let for hire. The transport system comprises vehicle charging stations at different locations, each vehicle charging station comprising several charging points. A vehicle can be collected for hire by a user from a charging point at a vehicle charging station and, after use, can be returned to a charging point for recharging at the same, or at a different, charging station.

Vehicles may be hired by users having any one of the commonly used credit cards carrying identifying information in magnetic form, which information is readable by wiping the credit card through the jaws on a card reader of known type.

Each vehicle is provided with a credit card reader in the form of a pair of jaws mounted externally on the vehicle body just behind the opening for the driver door. The hire of a vehicle is initiated by the user wiping his or her credit card through the reader. Thereafter, alternately wiping that particular credit card through the reader jaws causes locking and unlocking of the vehicle doors thereby obviating the need to issue a separate door key to each user. That particular credit card is recognised by the control system until the car is returned to the charging point and the hire is terminated. If, during the hire, another person wipes a credit card of theirs through the reader jaws, it will not be recognised by the control system. Thus, another random user cannot interrupt the hire while the vehicle is being used by the first user, for example, when the vehicle is parked and left temporarily unattended by the first user.

It is however envisaged to provide master cards for service mechanics to enable them to gain access to any of the vehicles at all times.

Therefore, the control system is operative to allow a user to use a credit card to initiate a hire transaction and to enable a bill to be sent to the user at a later date and also to lock and unlock the vehicle doors during the hire period. The credit card thus takes on a dual role during that time. The credit card may also be used to terminate the hire transaction.

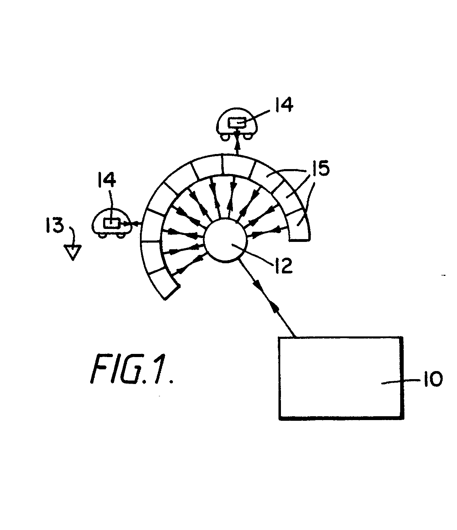

Referring now to figure 1, the control system comprises a central computer 10 in communication with several charging station computers 12, one at each charging station 13, and an in-car computer 14 in each vehicle. In figure 1, for simplicity only one charging station computer 12 is shown and is connected to the in-car computers 14 of two vehicles connected to charging points 15 at the charging station 13.

The central computer 10 is in duplex communication with each of the charging station computers 12 and is linked to these by a fixed communication network of dedicated lines supervised by the central computer 10. Each one of the in-car computers 14 is linked temporarily to one of the charging station computers 12 when the vehicle in question is connected to a charging point in the relevant charging station. The in-car computers 14 which are connected to a charging station computer 12 form a local network supervised by the charging station computer. During that time, the charging station computer 12 acts more or less transparently to permit the central computer 10 to communicate with any one of the in-car computers 14. When the vehicles are on hire and away from a charging station, the in-car computers 14 operate autonomously without any communication with the central computer 10 or with any of the charging station computers 12.

The charging connection between a vehicle and a charging point may be achieved by the user manually plugging the vehicle into a charging point or by an automatic connection effected when the vehicle is driven up to charging point, for example, the vehicle may be provided with a fin receivable in a slot provided in the charging point. When a vehicle is connected to a charging point, its in-car computer 14 communicates with the charging station computer 12 via an RF connection. The communication links between a charging station computer 12 and the in-car computers 14 in the vehicles on charging points at that charging station is of a multi-drop configuration and each of the in-car computers 14 is polled in sequence by the charging station computer 12, after first being identified on arrival by a special polling protocol, to collect data from the in-car computers 14 and to transmit messages to them.

The central computer 10 is responsible for overall supervision of the charging station computers 12 and the in-car computers 14 and also performs accounting functions and holds records containing customer details, current hire tarrifs, information relating to the vehicles for hire and their current operational status and information regarding the availability of parking space in each charging station. The central computer is also in communication with a central register holding current information relating to stolen credit cards so that the authenticity of a user's credit card can be checked.

The charging station computers 12 supervise vehicle hire and return and parking space reservation procedures with the support of the central computer 10. In the event of communication with the central computer 10 being temporarily impossible due to computer or communications failure, the charging station computers 12 have a limited ability to act autonomously to handle hire returns and invoicing as will be described.

The charging station computers 12 are powered from the mains. The in-car computers 14 are powered from their vehicle batteries. In both cases, a RAM battery back-up is provided which will be recharged from the logic power supply.

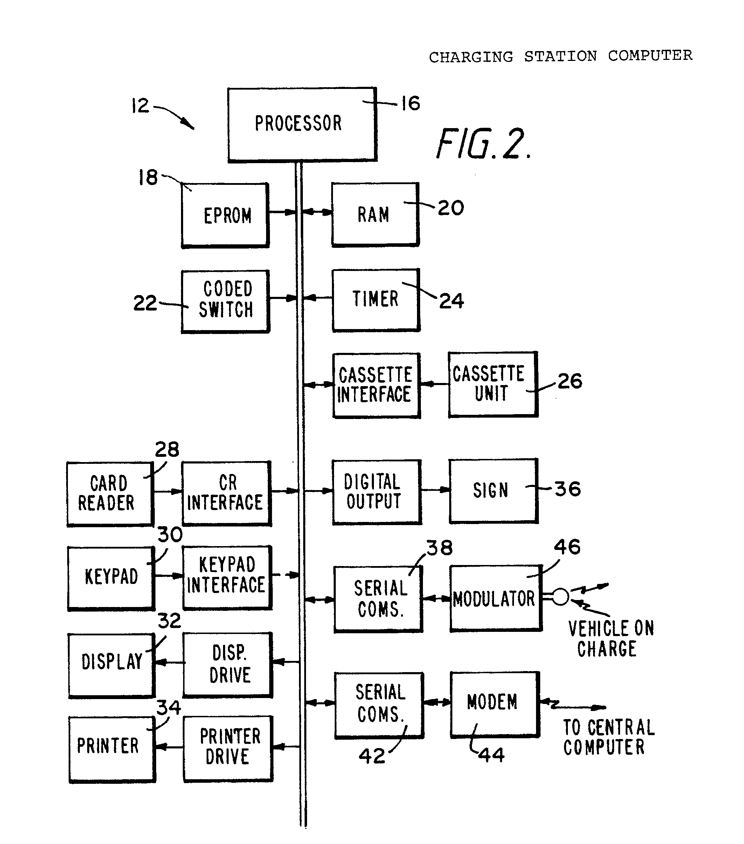

Referring to figure 2, each charging station computer 12 comprises an Intel 8085 microprocessor 16, an EPROM 18 for storing the application programmes and fixed data, a CMOS RAM 20 for storing variables such as time of day, hire tariffs etc, a coded switch 22 carrying a vehicle station identification code and a timer 24. The peripheral equipment associated with each charging station computer 12 comprises a cassette unit 26, a card reader 28, a keypad 30, a display 32, a printer 34 and an "all spaces reserved" sign 36. Suitable interfaces and drivers are provided for the peripheral components as indicated in figure 2.

The charging station computer 12 communicates with the in-car computers 14 of vehicles at charging points via a serial communications interface 38 and a modulator 46 and communicates with the central computer 10 via a serial communications interface 42 and a modem 44.

The cassette unit 26 is inaccessible to the public and is used to store information passed between in-car computers 14 and the relevant charging station computer 12 during any periods when communication with the central computer 10 is impossible. When communication with the central computer 10 resumes, the information stored on cassette is recovered and transmitted to the central computer 10.

The card reader 28, keypad 30, display 32 and printer 34 are accessible to the public. They are all of known type and are of vandal-proof construction.

When the card reader 28 is presented with a credit card a PLEASE WAIT message is shown on the display 32 whilst the charging station computer 12 determines the card category without referring to the central computer 10. If the credit card is from a new hirer then a GO TO CAR message is shown on the display 32. If the credit card is one from a recently returned hirer then a receipt is printed by the printer 34. The printer 34 is also used for printing general messages from the central computer 10.

The keypad 30 comprises numeric keys (0-9) and two function keys - a PARKING key for making a parking space reservation request and an ENTER key. A map of all of the charging stations in the area is provided at each charging station. Each charging station is given a particular reference number so that the user can key in the number of the charging station at which he wishes to reserve a parking space. The display 32 indicates acknowledgement or rejection of parking space reservation requests and may also display any general messages about road or parking conditions sent to it from the central computer 10.

The "all spaces reserved" sign is lit up when all the charging points at a charging station are either being used by vehicles or are reserved as parking spaces for vehicles yet to arrive.

Similarly to the charging station computers 12, each of the in-car computers 14 comprises an Intel 8085 microprocessor 46, an EPROM 48, RAM 50, coded switch 52 carrying a particular vehicle identity code and timer 54.

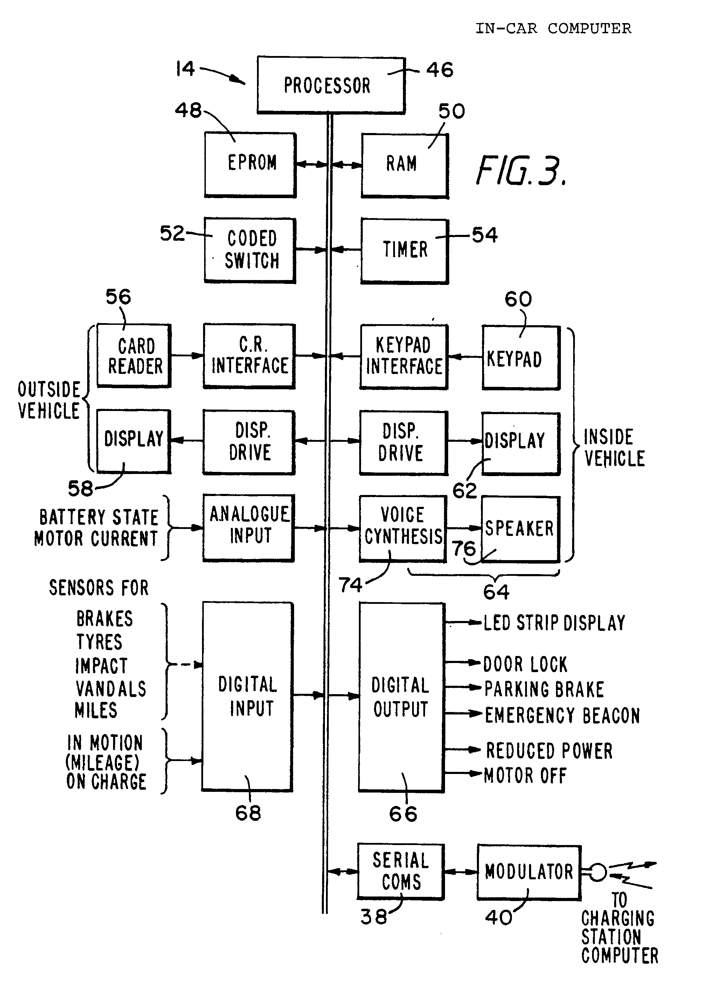

Now referring to Fig.3, the in-car computer 14 is connected to a card reader 56 comprising a pair of jaws and a display 58 mounted externally on the particular vehicle and to a keypad 60, display 62 and voice synthesis system 64 inside the vehicle. The in-car computer 14 is also connected to an LED strip display inside the vehicle, and to switches controlling the door locks, a parking brake, an emergency beacon, a reduced power output and the vehicle motor.

Various sensors for sensing the charge-state of the battery, the motor current, whether the vehicle is in motion or on charge and the mileage covered are each connected to an appropriate digital input unit 68 for providing signals to the microprocessor 46.

In response to presentation of a user's credit card, signals from the external card reader 56 will transmit serial information to the microprocessor 46 which will be used to qualify the hirer for charging purposes at the start of hire, to lock and unlock the vehicle doors during the period of hire and to terminate the hire.

The external display 58 displays messages such as:

| | |
|---|---|
| BATTERY DEAD | CONNECTED |
| BATTERY LOW | PLEASE WAIT |
| ON CHARGE | REENTER CARD |
| CAR UNSERVICEABLE | O.K. |
| RESERVED | ON HIRE |
| AVAILABLE FOR HIRE | HIRE REFUSED |

The display 62 inside the vehicle displays the charge accumulated for the current hire which is a function of the hire time and the LED strip display indicates the time remaining before the vehicle battery requires charging. The internal display 62 also operates in conjunction with the keypad 60 to echo keyed selections and to warn of the consequences of confirming a selection. When a vehicle is at a charging point, the display 62 also displays messages received from the central computer 10.

The keypad 60 comprises numeric (0-9) keys and function keys - a RESERVE key for reserving the vehicle for further use, a BEACON ON key, an UNSERVICEABLE key and an ENTER key. Selections are confirmed by typing 999 and pressing the ENTER key.

The voice synthesiser 64 comprises a voice synthesis unit 74 and a speaker 76 and is used to provide an audible warning to the user if the battery voltage is low and also reminds the hirer to remove all his goods at the end of the hire period. Audio messages include "battery dead", "battery low" and "terminate hire instructions".

The emergency beacon is operable to transmit radio signals to permit location of the vehicle in the case of battery failure or other break-down and in the case of some forms of unauthorised use. The emergency beacon is independently battery powered.

The door locks are each operated by a solenoid switch responsive to signals from the processor 46.

In use, the battery voltage measured will be compared against reference "low" and "dead" limits. The "low" limit indicates an urgent need to recharge and in that event further use of the vehicle will only be permitted at reduced power. If the battery voltage has reached the "dead" limit the in-car computer 14 prevents further use of the vehicle, outputting BATTERY DEAD on the external display 58, turning off the motor and emitting an audio message to the user. The emergency beacon is then activated. In fact, a battery reserve is available but is only released in response to presentation of a master card to the card reader 56.

The following page is a summary of the messages which pass between the central computer 10 and the charging station computers 12 and between each charging station 12 and the in-car computers 14 of the vehicles at that charging station -

Reading from the top of that summary the central computer 10 sends regular STATION ID polling signals to each charging station computer 12 to permit information to be sent from each charging station 12 to the central computer 10. Likewise, each of the charging stations 12 sends regular polling signals to the in-car computers 14 of the vehicles at that charging station.

## COMMUNICATIONS MESSAGE SUMMARY

```
Car          <--->        Charging Station      <--->       Central Computer


<- CAR I.D. POLL          <-            <- STATION I.D. POLL      <-


<- NEW ARRIVAL POLL       <-
v                                    -> ARRIVAL message       ->
 -> CAR STATUS message    -> - - - -> STATUS message         ->
^
<- STATUS INTERROGATION   <-


                                      <- STATUS INTERROGATION  <-
                                     v
                                      -> STATION STATUS message->


 -> TERMINATE HIRE        -> - - - -> TERMINATE HIRE          ->
                                      -> CHARGE message        ->


 -> REQUEST FOR HIRE      -> - - - -> REQUEST FOR HIRE        ->
                                                               v
<- AUTHORIZE/REFUSE       <- - - - <- GOOD/BAD CARD           <-


                                      -> PARKING SPACE REQUEST ->
                                                               v
                                      <- CONFIRM/REFUSE        <-


<- FREE MESSAGE (Car)     <- - - - <- FREE MESSAGE (Car)      <-
                                      <- FREE MESSAGE (Ch.St.) <-

                                      -> DEPARTURE message     ->

<- BEACON OFF             <- - - - <- BEACON OFF              <-
<- RETURN TO SERVICE      <- - - - <- RETURN TO SERVICE       <-
<- RELEASE RESERVATION    <- - - - <- RELEASE RESERVATION     <-


                                      <- CAR PARK FULL/SPACE   <-

                                      -> CASSETTE DUMP         ->

                                      <- STRATEGIC DATA message<-
```

The system is programmed so that the in-car computers 14 in all of the vehicles at a charging station are receptive to NEW ARRIVAL poll messages from the charging station computer 12. This polling message sets the receiving ID (which will then be unknown) to zero and, if an in-car computer 14 is receiving that pole for the first time on returning to a charging station, it will respond by giving its ID in a CAR STATUS message containing information about the battery state and whether the car is: serviceable or unservicable, on charge, reserved or available; together with information as to the state of the beacon and the time of day from the in-car computer clock.

The charging station computer 12 sends regular STATUS INTERROGATION messages to the in-car computers 14 connected thereto and the in-car computers 14 respond with CAR STATUS messages which are transmitted via the charging station computer 12 to the central computer 10. Likewise, the central computer 10 transmits STATUS INTERROGATION messages to each charging station computer 12 which responds by providing information relating to the number of vehicles presently at that station, the number of available parking spaces etc in a STATION STATUS message to the central computer 10.

On termination of a hire, a TERMINATE HIRE message is sent from the in-car computer 14 to the central computer 10 via the charging station computer 12 and the charging station computer 12 also sends a CHARGE message to the central computer 10 including information regarding the hire charge calculated, VAT calculation, invoice serial number and the time of day.

When a new hirer wipes his or her credit card through the card reader 56 on the body of a vehicle at a charging point, this causes a REQUEST FOR HIRE message to be sent from the in-car computer 14 to the central computer 10 via the charging station computer 12. The central computer 10 checks whether the credit card is acceptable by accessing the central credit card register and sends a GOOD/BAD CARD signal, as appropriate, to the in-car computer 14 via the charging station computer 12 to authorise or refuse the hire respectively.

In response to a request for parking space made using the keypad 30 at a charging station, the central computer 10 checks whether there are any parking spaces presently available at the particular charging station to which the request relates and sends a signal confirming or refusing the request, as appropriate, which is displayed on the display 32 at the first charging station.

Messages of a general nature can be transmitted from the central computer 10 to the in-car computers 14 via the charging station computers 12 and to the charging station computers 12 themselves. When a vehicle leaves a charging point, the charging station computer 12 senses this by failure of the in-car computer 14 of that vehicle to response to its polling signals and then sends a DEPARTURE message to the central computer 10.

Signals for turning vehicle beacons off, returning vehicles to service and for releasing vehicle reservations are sent from central computer 10 to the in-car computers 14 of the respective vehicles via the charging station computers 12.

The central computer 10 also sends a signal to each of the charging station computers 12 indicating whether there are any spaces still available at that charging station, i.e whether there are any charging points not already occupied by vehicles which are not reserved, and the charging station computer 12 operates the sign 36 accordingly.

The CASSETTE DUMP message is employed to transfer information recorded on the charging station cassette during periods of non-communication with the central computer 10.

The STRATEGIC DATA message sent from the central computer 10 to the charging station computers 12 relates to housekeeping tasks performed by the central computer 10 once a day and contains information including the next 7 day's tariff.

Use of the urban transport system will now be described.

If, on entering a charging station, a new hirer wipes a credit card through the card reader 28 of the charging station computer 12, a GO TO CAR message will appear on the display 32. If the user finds that in fact there are no vehicles at that particular charging station which are presently available for hire, on again wiping its card through the reader 28, the display 32 will indicate the expected time at which the next vehicle will complete battery charging or will return from hire.

The user may make a request to reserve a parking space at the same charging station or at a different charging station by pressing the PARKING key of the keypad 30. The display 32 then indicates the consequence of making such a request i.e details of the charge which will be levied for reserving a parking space irrespective of whether it is taken up. The display 32 then indicates a request for confirmation of the parking reservation which is confirmed by the user keying in code 999 and pressing the ENTER key. The display 32 then requests entry of the destination code of the charging station in question which the user keys in by referring to the map provided and by using the numeric keys followed by the ENTER key. These entries are echoed on the display 32. A PARKING SPACE REQUEST message is then sent to the central computer 10 and a PLEASE WAIT MESSAGE is indicated on the display 32. Confirmation or refusal of the request is subsequently displayed on the display 32. The central computer allocates a certain amount of time for the reserved parking space to be taken up depending on the distance between the charging station at which the parking space reservation request is made and the one which is the user's intended destination. After that time the reservation is automatically cancelled.

The user then goes to any vehicle displaying AVAILABLE FOR HIRE on the external vehicle display 58 and wipes his credit card through the jaws of the external reader 56 on the vehicle. This will cause the display 58 to indicate a PLEASE WAIT message. A REQUEST FOR HIRE message will then be sent to the central computer 10 via the charging station computer 12 which will either authorise or refuse the hire. If the central computer 10 is temporarily unavailable then no new hires will be authorised until later.

The effect of an AUTHORISED HIRE message being relayed to the in-car computer 14 by the charging station computer 12 is that the hirer's credit card number, the current tariff, last mileage reading and time of the day are stored in the memory of the in-car computer 14. If necessary, the mileage and time of day information is updated in the memory of the in-car computer 14. An O.K message is displayed on the display 58 of the vehicle and the in-car computer processor 46 sends a signal to the solenoid switches controlling the vehicle door locks so as to unlock the door. From then on, the hire time is recorded. The display 58 then indicates an ON HIRE message.

If the central computer 10 finds the user's credit card to be invalid it will refuse the hire and a HIRE REFUSED message will appear on the display 58.

An authorised hirer can then drive the vehicle away from the charging point. The vehicle is fitted with a press-button ignition so that no separate ignition key is necessary.

While on hire, the in-car computer 14 computes the current hire charge using the stored tariff and a measure of the elapsed time since the beginning of the hire. The driving time which remains is calculated using signals from the battery state and motor current sensors as it depends on the initial charge state of the battery and a running integral of time and motor current. An audible warning is issued by the voice synthesizer 64 when the estimated time to "battery low" condition is 15 minutes. The current hire charge is displayed on the internal display 62 and the driving time remaining is represented on the LED strip display inside the vehicle.

The in-car computer 14 responds to signals from the "in motion" sensor and the motor current sensor by activating the parking brake if the vehicle is stationary and the motor current is low and releasing the parking brake if the motor current increases.

In the event that charging of the battery is sensed when the vehicle is not at a charging point, the in-car computer 14 acts to operate the emergency beacon.

During the hire, the user can park the vehicle in the normal way and by wiping his credit card through the jaws of the external card reader 56 causes the vehicle doors to be locked. On returning to the vehicle and again wiping his card through the jaws of the card reader 56 the doors are again unlocked and so on. The in-car computer 14 is programmed so as to recognise only that particular credit card during the hire of that user and will not respond to any other cards except a master card held by a service mechanic.

Should the user press either of the UNSERVICEABLE or BEACON ON keys of the interior keypad 60, the display 62 indicates the consequence of that action and requests confirmation. If confirmed, the appropriate message is displayed on the external display 58 and a service mechanic will be called.

On returning to a charging station, the user connects the vehicle to a charging point at which time communication between the in-car computer 14 and the charging station computer 12 is established. The internal display 62 will show CONNECTED to advise the user of successful docking. The user then has the option of reserving that vehicle if he wishes or of terminating the hire. He can reserve the vehicle for a predetermined period of time by pressing the RESERVE button on the internal keypad 60 and, if the request for reservation is confirmed, the hire will continue even if the user leaves the car and locks the doors by again wiping his credit card through the reader 56. Otherwise, the act of locking the vehicle doors with the vehicle is connected to a charging point will serve to terminate the hire. If the external card reader 56 on the vehicle is not used within a set period of time from docking of the vehicle at a charging point, then the car doors will automatically be locked by the in-car computer 14 and the hire will be terminated. A penalty charge may be levied in that instance.

Before hire is terminated, the user will be asked, either using the internal display 62 or the voice synthesiser 64, to press the UNSERVICEABLE button on the keypad 60 if the car has a fault and to leave a written fault report. He will also be advised that a receipt may be obtained at the central desk.

On leaving the vehicle, if the user wishes to obtain a receipt he wipes his credit card through the card reader 28 of the charging station computer 12 and a receipt will be issued by the printer 34.

It is envisaged that each charging station may be provided with an entry barrier and a further card reader associated with the barrier so that hirers returning vehicles can be prevented from using parking spaces reserved by others.

Although the control system is programmed to recognise standard credit cards a special purpose credit card may be issued to regular users.

It is envisaged that programmed maintenance devices will be provided which can communicate with the in-car computers 14 using the communication link normally used for interconnecting the in-car computers 14 with the charging station computers 12. The maintenance devices will be used for test purposes.

It should be understood that many variations are possible whilst still falling within the scope of the present claims.

In particular, any suitable wipe-through sequence of a credit card in the card reader 56 may be devised for initiating the hire transaction and thereafter for unlocking and locking the car doors. The in-car computers 14 may be programmed so as to lock and unlock all the vehicle doors simultaneously or so as to lock and unlock only the driver's door as required.

As well as or instead of unlocking and locking the car doors further facilities may be controlled by the control system, for example, activation of the vehicle ignition.

Furthermore, it should be appreciated that the control system according to the present invention may be adapted to be used in connection with any type of appliance let for hire for example all types of machinery, tools etc in which an information carrying token can be used as a key to operate an on/off switch or to access other control means.

In relation to the embodiment described above, instead of a credit card, any other type of information carrying token can be used together with an appropriate means for reading information from the token.

## Claims

1. A control system responsive to a user-presented information-bearing token for use in controlling access to the use of a vehicle by way of one or more access control units, such as door locks and/or ignition switch thereof, comprising means (12,14,28, 56) for receiving information identifying a particular token presented thereto, characterised by the provision of means (14) for storing said identifying information and by the system being operable so as, when intermittently presented with that token during a terminable time period after receiving said identifying information, to recognise that token as a key and upon presentation thereof to permit such access to the use of the vehicle and until the termination of said time period not to so recognise other tokens, and thereafter no longer to permit such access to the use of the vehicle until further identifying information relating to a token is received.

2. A control system according to claim 1 wherein termination of the time period is achieved by presentation of the token to the control system in a particular manner and/or at a particular time.

3. A control system according to claim 1 or claim 2 which initially checks the validity of the token and is operable to cause rejection of an invalid token.

4. A control system according to any preceding claim wherein the identifying information is initially received as a result of reading information from the token.

5. A control system according to any of claims 1 to 3 wherein the identifying information is initially received from a source other than the token.

6. A control system according to any preceding claim which is operable to permit a token to function as a key to a lock.

7. A control system according to any preceding claim adapted for use with a token in the form of a credit card.

8. A control system according to any preceding claim comprising a central control unit in communication with a plurality of auxiliary control units wherein each auxiliary unit is in communication with at least one facility of the vehicle and is responsive to signals from the central control unit.

9. A control system according to claim 8 wherein the time period is terminated by the receipt by an auxiliary control unit of a selected signal from the central control unit.

10. A control system according to claim 8 or claim 9 wherein the identifying information is sent to the auxiliary control units from the central control unit.

11. A control system according to claim 8 or claim 9 wherein the identifying information is sent to the central control unit via an auxiliary control unit.

12. A control system according to any preceding claim adapted for use in a vehicle transportation system.

13. A control system according to claim 12 operable to permit a token to function as a key to the door of a vehicle.

14. A control system according to claim 12 when dependent on claim 8 wherein an auxiliary control unit is disposed in each vehicle.

15. A control system according to claim 14 wherein the vehicles are electrically powered and the auxiliary control units are connectable to the central control unit via intermediate control units associated with means for charging the vehicles.

16. A control system according to any of claims 12 to 15 wherein means for reading information from a token is mounted externally on the body of each vehicle.

17. A control system according to any of claims 12 to 16 wherein the time period is terminated by presentation of the token to token reading means associated with the relevant vehicle when the vehicle is connected to a charging point after having just returned from hire.

18. A control system according to any preceding claim comprising means for receiving information identifying a payment token and/or the owner thereof to enable payment to be made for the use of one or more facilities of the vehicle which system is adapted also to recognise the payment token as a key and to permit access to and/or operation of one or more of the facilities when intermittently presented with the token after receiving said identifying information.

19. A control system according to claim 18 comprising means for calculating the costs involved in the use of the or each facility.

20. A control system according to claim 19 which is arranged so that presentation or information identifying the payment token and/or the owner thereof initiates calculation of the costs involved.

## Revendications

1. Système de contrôle sensible à un jeton porteur d'informations présenté par un utilisateur, et destiné à être utilisé pour contrôler un accès à l'utilisation d'un véhicule par l'intermédiaire d'une ou de plusieurs unités de contrôle d'accès, telles que des serrures de porte et/ou un contact de celui-ci, comportant des moyens (12, 14, 28, 56) pour recevoir des informations identifiant un jeton particulier qui lui est présenté, caractérisé en ce qu'il est prévu des moyens (14) pour stocker lesdites informations d'identification, et en ce que le système est apte à opérer pour, lorsque ce jeton lui est présenté d'une manière intermittente au cours d'une période de temps pouvant prendre fin, après réception desdites informations d'identification, reconnaître ce jeton comme une clé et, sur présentation de celui-ci, permettre cet accès à l'utilisation du véhicule, sans reconnaître d'autres jetons, jusqu'à la fin de ladite période de temps, et pour, après celle-ci, ne plus permettre cet accès à l'utilisation du véhicule jusqu'à réception d'autres informations d'identification relatives à un jeton.

2. Système de contrôle selon la revendication 1, dans lequel la fin de la période de temps est provoquée par la présentation du jeton au système de contrôle d'une manière particulière et/ou à un moment particulier.

3. Système de contrôle selon la revendication 1 ou la revendication 2, qui vérifie initialement la validité du jeton et est apte à opérer pour provoquer le rejet d'un jeton non valable.

4. Système de contrôle selon l'une quelconque des revendications précédentes, dans lequel les informations d'identification sont initialement reçues par suite d'une lecture d'informations à partir du jeton.

5. Système de contrôle selon l'une quelconque des revendications 1 à 3, dans lequel les informations d'identification sont initialement reçues à partir d'une source autre que le jeton.

6. Système de contrôle selon l'une quelconque des revendications précédentes, apte à opérer pour permettre à un jeton de fonctionner comme une clé vis-à-vis d'une serrure.

10

EP 0 212 842 B1

7. Système de contrôle selon l'une quelconque des revendications précédentes, adapté pour être utilisé en association avec un jeton qui se présente sous la forme d'une carte de crédit.

8. Système de contrôle selon l'une quelconque des revendications précédentes, comportant une unité de contrôle centrale en communication avec plusieurs unités de contrôle auxiliaires, dans lequel chacune des unités auxiliaires est en communication avec un ou plusieurs équipements du véhicule et est sensible à des signaux provenant de l'unité de contrôle centrale.

9. Système de contrôle selon la revendication 8, dans lequel la période de temps est terminée par la réception par une unité de contrôle auxiliaire d'un signal sélectionné provenant de l'unité de contrôle centrale.

10. Système de contrôle selon la revendication 8 ou la revendication 9, dans lequel les informations d'identification sont transmises aux unités de contrôle auxiliaires à partir de l'unité de contrôle centrale.

11. Système de contrôle selon la revendication 8 ou la revendication 9, dans lequel les informations d'identification sont transmises à l'unité de contrôle centrale par l'intermédiaire d'une unité de contrôle auxiliaire.

12. Système de contrôle selon l'une quelconque des revendications précédentes, adapté pour être utilisé dans un système de transport par véhicules.

13. Système de contrôle selon la revendication 12, apte à opérer pour permettre à un jeton de fonctionner comme une clé vis-à-vis de la porte d'un véhicule.

14. Système de contrôle selon la revendication 12, lorsque celle-ci est dépendante de la revendication 8, dans lequel une unité de contrôle auxiliaire est disposée dans chaque véhicule.

15. Système de contrôle selon la revendication 14, dans lequel les véhicules sont actionnés électriquement et les unités de contrôle auxiliaires peuvent être reliées à l'unité de contrôle centrale grâce à des unités de contrôle intermédiaires, associées à des moyens destinés à recharger les véhicules.

16. Système de contrôle selon l'une quelconque des revendications 12 à 15, dans lequel des moyens destinés à lire des informations à partir d'un jeton, sont montés extérieurement sur la carrosserie de chaque véhicule.

17. Système de contrôle selon l'une quelconque des revendications 12 à 16, dans lequel la période de temps est terminée par la présentation du jeton à des moyens de lecture de jeton associés au véhicule correspondant, lorsque le véhicule est relié à un point de recharge, juste après son retour de location.

18. Système de contrôle selon l'une quelconque des revendications précédentes, comportant des moyens pour recevoir des informations identifiant un jeton de paiement et/ou le propriétaire de celui-ci, afin qu'un paiement puisse être effectué en échange de l'utilisation d'un ou de plusieurs équipements du véhicule, système qui est également adapté pour reconnaître le jeton de paiement comme une clé et pour, lorsque le jeton lui est présenté d'une manière intermittente après réception desdites informations d'identification, permettre un accès à l'un au moins des équipements et/ou un fonctionnement de celui-ci.

19. Système de contrôle selon la revendication 18, comportant des moyens pour calculer les frais entraînés par l'utilisation du ou des équipements.

20. Système de contrôle selon la revendication 19, conçu pour que la présentation d'informations identifiant le jeton de paiement et/ou le propriétaire de celui-ci, déclenche le calcul des frais entraînés.

**Patentansprüche**

1. Steuersystem, das auf eine von einem Benutzer präsentierte, Informationen tragende Marke anspricht, zur Zugriffssteuerung bei der Benutzung eines Fahrzeugs über ein oder mehrere Zugriffssteuereinhei-

11

ten, etwa deren Türschlösser und/oder Zündschalter, mit einer Einrichtung (12, 14, 28, 56) zum Empfang von Informationen, die eine bestimmte, ihr präsentierte Marke identifizieren, dadurch gekennzeichnet, daß eine Einrichtung (14) zur Speicherung der Identifikationsinformationen vorgesehen ist, und daß das System so betätigbar ist, daß es dann, wenn ihr die Marke während einer beendbaren Zeitspanne nach Empfang der Identifikationsinformationen intermittierend präsentiert wird, diese Marke als Schlüssel anerkennt, nach deren Präsentation Zugriff zur Benutzung des Fahrzeugs gestattet, bis zur Beendigung der Zeitspanne keine anderen Marken anerkennt sowie danach diesen Zugriff zur Benutzung des Fahrzeugs nicht mehr gestattet, bis weitere Identifikationsinformationen bezüglich einer Marke empfangen werden.

2. Steuersystem nach Anspruch 1, wobei die Beendigung der Zeitspanne dadurch erreicht wird, daß die Marke dem Steuersystem in einer bestimmten Weise und/oder zu einer bestimmten Zeit präsentiert wird.

3. Steuersystem nach Anspruch 1 oder 2, das anfangs die Gültigkeit der Marke prüft und so betätigbar ist, daß es eine ungültige Marke zurückweist.

4. Steuersystem nach einem der vorhergehenden Ansprüche, wobei die Identifikationsinformationen anfangs durch Lesen von Informationen von der Marke empfangen werden.

5. Steuersystem nach einem der Ansprüche 1 bis 3, wobei die Identifikationsinformationen anfangs von einer von der Marke verschiedenen Quelle empfangen werden.

6. Steuersystem nach einem der vorhergehenden Ansprüche, das so betätigbar ist, daß es die Funktion einer Marke als Schlüssel zu einem Schloß gestattet.

7. Steuersystem nach einem der vorhergehenden Ansprüche, das zur Verwendung mit einer Marke in Form einer Kreditkarte geeignet ist.

8. Steuersystem nach einem der vorhergehenden Ansprüche, umfassend eine mit mehreren Hilfssteuereinheiten in Verbindung stehende Zentralsteuereinheit, wobei jede Hilfseinheit mit mindestens einer Vorrichtung des Fahrzeugs in Verbindung steht und auf Signale von der Zentralsteuereinheit anspricht.

9. Steuersystem nach Anspruch 8, wobei die Zeitspanne dadurch beendet wird, daß eine Hilfssteuereinheit von der Zentralsteuereinheit ein ausgewähltes Signal empfängt.

10. Steuersystem nach Anspruch 8 oder 9, wobei die Identifikationsinformationen von der Zentralsteuereinheit an die Hilfssteuereinheiten gesandt werden.

11. Steuersystem nach Anspruch 8 oder 9, wobei die Identifikationsinformationen über eine Hilfssteuereinheit an die Zentralsteuereinheit gesandt werden.

12. Steuersystem nach einem der vorhergehenden Ansprüche, das zur Verwendung in einem Fahrzeug-Verkehrssystem geeignet ist.

13. Steuersystem nach Anspruch 12, das so betätigbar ist, daß es die Funktion einer Marke als Schlüssel zur Tür eines Fahrzeugs gestattet.

14. Steuersystem nach Anspruch 12, soweit dieser auf Anspruch 8 rückbezogen ist, wobei in jedem Fahrzeug eine Hilfssteuereinheit angeordnet ist.

15. Steuersystem nach Anspruch 14, wobei die Fahrzeuge elektrisch betrieben sind und die Hilfssteuereinheiten mit der Zentralsteuereinheit über Zwischensteuereinheiten verbindbar sind, die Einrichtungen zum Laden der Fahrzeuge zugeordnet sind.

16. Steuersystem nach einem der Ansprüche 12 bis 15, wobei eine Einrichtung zum Lesen von Informationen von einer Marke außen an der Karosserie jedes Fahrzeugs montiert ist.

17. Steuersystem nach einem der Ansprüche 12 bis 16, wobei die Zeitspanne dadurch beendet wird, daß die Marke einer dem betreffenden Fahrzeug zugeordneten Marken-Leseeinrichtung präsentiert wird, wenn das Fahrzeug mit einer Ladestelle verbunden wird, nachdem es soeben von einer Vermietung zurückgekehrt ist.

18. Steuersystem nach einem der vorhergehenden Ansprüche, mit einer Einrichtung zum Empfang von Informationen, die eine Zahlmarke und/oder deren Inhaber identifizieren, um eine Bezahlung für die Benutzung einer oder mehrerer Vorrichtungen des Fahrzeugs zu ermöglichen, wobei das System ferner so ausgelegt ist, daß es die Zahlmarke als Schlüssel anerkennt und Zugriff zu und/oder den Betrieb einer oder mehrerer der Vorrichtungen gestattet, wenn ihm die Marke nach Empfang der Identifikationsinformationen intermittierend präsentiert wird.

19. Steuersystem nach Anspruch 18, mit einer Einrichtung zur Berechnung der mit der Benutzung der oder jeder Vorrichtung anfallenden Kosten.

20. Steuersystem nach Anspruch 19, das so eingerichtet ist, daß die Präsentation von Informationen, die die Zahlmarke und/oder deren Inhaber identifizieren, die Berechnung der anfallenden Kosten einleitet.

FIG.1.

CHARGING STATION COMPUTER

FIG.2.

IN-CAR COMPUTER

FIG.3.